# EUROPEAN PATENT APPLICATION

(11) **EP 4 188 026 A1**
(43) Date of publication of application: **31.05.2023**
(21) Application number: 21846355.2
(22) Date of filing: 23.07.2021
(51) Int. Cl.: H04W 74/08

(54) **RANDOM ACCESS METHOD, CONFIGURATION METHOD, AND RELATED DEVICE**

(30) Priority: 24.07.2020 CN 202010724052
(71) Applicant: Vivo Mobile Communication Co., Ltd., Dongguan, Guangdong 523863 (CN)
(72) Inventor: LI, Na, Dongguan, Guangdong 523863 (CN); WU, Kai, Dongguan, Guangdong 523863 (CN)
(74) Representative: Raffay & Fleck
(86) International application number: PCT/CN2021/108082
(87) International publication number: WO 2022/017490

(57) **Abstract**

The present application relates to the technical field of communications. Disclosed are a random access method, a configuration method, and a related device. The random access method comprises: performing repeated transmission on target information in a target random access process, the target information comprising a physical uplink shared channel (PUSCH).

## Description

### CROSS-REFERENCE TO RELATED APPLICATIONS

This application claims priority to Chinese Patent Application No. 202010724052.9 filed in China on July 24, 2020, which is incorporated herein by reference in its entirety.

### TECHNICAL FIELD

This application relates to the field of communications technologies, and in particular, to a random access method, a configuration method, and a related device.

### BACKGROUND

Reduced capability UE (Reduced Capability UE, RedCap UE) refers to some devices with limited capabilities, such as wearable devices, industrial sensors, and video monitoring devices. RedCap UE needs to reduce complexity in terms of a quantity of receiving antennas and sending antennas, supported bandwidth, and time and capability of a terminal to process data and signals. Reducing a quantity of sending antennas and supported bandwidth of RedCap UE leads to reduction of uplink coverage, thereby resulting in a large delay for the RedCap UE in completing a physical random access procedure.

### SUMMARY

Embodiments of this application provide a random access method, a configuration method, and a related device, so as to resolve a problem that RedCap UE has a large delay in completing a PRACH.

According to a first aspect, a random access method is provided and applied to a terminal, where the method includes:
performing a repetition of target information in a target random access procedure, where the target information includes a physical uplink shared channel PUSCH.

According to a second aspect, a configuration method is provided and applied to a network-side device, where the method includes:
sending first configuration information, where the first configuration information is used to configure a terminal to perform a repetition of target information in a target random access procedure, where the target information includes a physical uplink shared channel PUSCH.

According to a third aspect, a random access apparatus is provided and applied to a terminal. The random access apparatus includes:
a transmission module, configured to perform a repetition of target information in a target random access procedure, where the target information includes a physical uplink shared channel PUSCH.

According to a fourth aspect, a configuration method is provided and applied to a network-side device, and including:
a first sending module, configured to send first configuration information, where the first configuration information is used to configure a terminal to perform a repetition of target information in a target random access procedure, where the target information includes a physical uplink shared channel PUSCH.

According to a fifth aspect, a terminal is provided. The terminal includes a processor, a memory, and a program or an instruction stored in the memory and capable of running on the processor, where when the program or the instruction is executed by the processor, the steps of the method according to the first aspect are implemented.

According to a sixth aspect, a network-side device is provided. The network-side device includes a processor, a memory, and a program or an instruction stored in the memory and capable of running on the processor, where when the program or the instruction is executed by the processor, the steps of the method according to the second aspect are implemented.

According to a seventh aspect, a readable storage medium is provided. The readable storage medium stores a program or an instruction, and when the program or the instruction is executed by a processor, the steps of the method according to the first aspect are implemented, or the steps of the method according to the second aspect are implemented.

According to an eighth aspect, a chip is provided. The chip includes a processor and a communications interface, where the communications interface is coupled to the processor, and the processor is configured to run a program or an instruction of a network-side device, to implement the method according to the first aspect, or the method according to the second aspect.

In the embodiments of this application, a terminal can perform a repetition of target information in a target random access procedure, where the target information includes a physical uplink shared channel PUSCH. In this way, uplink coverage of the PUSCH in the target random access procedure of the terminal can be enhanced, thereby reducing delay of the terminal in completing the target random access procedure.

### BRIEF DESCRIPTION OF DRAWINGS

FIG. 1 is a block diagram of a wireless communications system to which an embodiment of this application may be applied;
FIG. 2a is a flowchart of a contention based 4-step random access procedure according to an embodiment of this application;
FIG. 2b is a flowchart of a contention free 4-step random access procedure according to an embodiment of this application;
FIG. 3a is a flowchart of a contention based 2-step random access procedure according to an embodiment of this application;
FIG. 3b is a flowchart of a contention free 2-step random access procedure according to an embodiment of this application;
FIG. 4 is a schematic diagram of resource allocation of a message A according to an embodiment of this application;
FIG. 5 is a flowchart of a random access method according to an embodiment of this application;
FIG. 6a is a first schematic diagram of transmission of RO and transmission of PO according to an embodiment of this application;
FIG. 6b is a second schematic diagram of transmission of RO and transmission of PO according to an embodiment of this application;
FIG. 6c is a third schematic diagram of transmission of RO and transmission of PO according to an embodiment of this application;
FIG. 7a is a first schematic diagram of a repetition according to an embodiment of this application;
FIG. 7b is a second schematic diagram of a repetition according to an embodiment of this application;
FIG. 7c is a third schematic diagram of a repetition according to an embodiment of this application;
FIG. 8 is a flowchart of a configuration method according to an embodiment of this application;
FIG. 9 is a structural diagram of a random access apparatus according to an embodiment of this application;
FIG. 10 is a structural diagram of a configuration apparatus according to an embodiment of this application;
FIG. 11 is a structural diagram of a communications device according to an embodiment of this application;
FIG. 12 is a structural diagram of a terminal according to an embodiment of this application; and
FIG. 13 is a structural diagram of a network-side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the specification and claims of this application are used to distinguish between similar objects instead of describing a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that the technology described in this application is not limited to a Long Term Evolution (Long Time Evolution, LTE)/LTE-advanced (LTE-Advanced, LTE-A) system, and may also be used in various wireless communication systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, in the following descriptions, a new radio (New Radio, NR) system is described for an illustration purpose, and NR terms are used in most of the following descriptions, although these technologies may also be applied to other applications than an NR system application, such as a 6th generation (6th Generation, 6G) communications system.

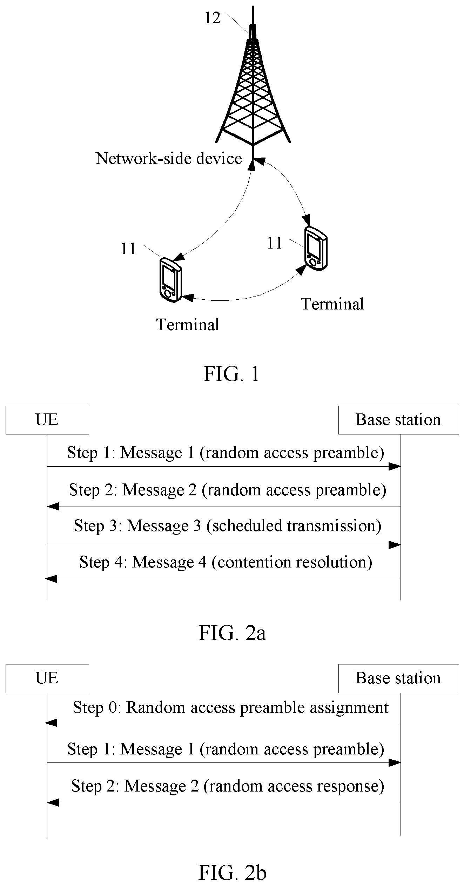

FIG. 1 is a block diagram of a wireless communications system to which embodiments of this application can be applied. The wireless communications system includes a terminal 11 and a network-side device 12. The terminal 11 may be referred to as a terminal device or user equipment (User Equipment, UE). The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable device), vehicle user equipment (VLTE), and pedestrian user equipment (PUE). The wearable device includes a bracelet, a headset, and glasses. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a Wi-Fi node, a transmitting receiving point (Transmitting Receiving Point, TRP), or some other appropriate term in the art. As long as the same technical effect is achieved, the base station is not limited to a specific technical term.

For ease of understanding, some content related to the embodiments of the present invention is described below:

### 1. A random access channel (Random Access Channel, RACH) procedure

Types of the random access procedures may include a 4-step random access procedure (4-step RACH) and a 2-step random access procedure (2-step RACH). The two types of RACHs support contention based random access (Contention Based Random Access, CBRA) and contention free random access (Contention Free Random Access, CFRA).

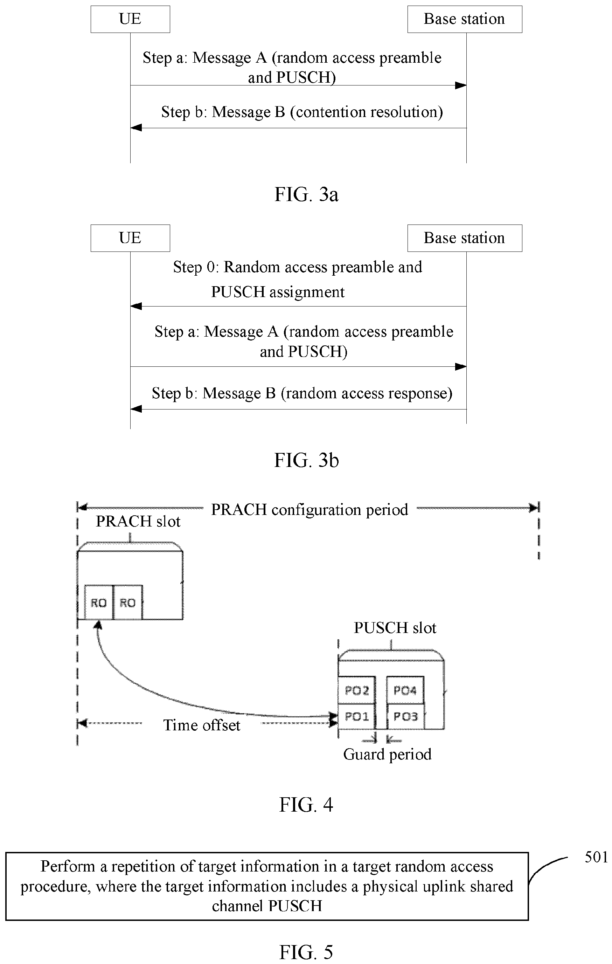

FIG. 2a may be referred to for a flowchart of a contention based 4-step random access procedure. FIG. 2b may be referred to for a flowchart of a contention free 4-step random access procedure. FIG. 3a may be referred to for a flowchart of a contention based 2-step random access procedure. FIG. 3b may be referred to for a flowchart of a contention free 2-step random access procedure.

As shown in FIG. 2a, the contention based 4-step random access procedure may include the following steps.

Step 1: LTE sends a message 1 to a base station.

The message (Message, Msg) 1 may be regarded as a random access request and contain a random access preamble (Random Access Preamble).

Step 2: The base station sends a message 2 to the UE.

The message 2 may be regarded as a random access response (Random Access Response, RAR), and contain uplink grant (Uplink Grant).

Step 3: The LTE sends a message 3 to the base station.

The Msg.3 may be regarded as a scheduled transmission (Scheduled Transmission) and contain an UE identity.

Step 4: The base station sends a message 4 to the UE.

The Msg 4 may contain a contention resolution (Contention Resolution). The UE receives the Msg 4, and determines whether contention is successfully resolved. If the contention is successfully resolved, the random access procedure is successful; otherwise, the terminal re-initiates a random access procedure.

The contention based 4-step random access procedure is described as follows.

The UE first sends the Msg l including the preamble to the network. After the UE sends the preamble, it monitors the physical downlink control channel (Physical Downlink Control Channel, PDCCH) in an RAR time window, and use a fallback (fallback) downlink control information (Downlink Control Information, DCI) format (format), that is, DCI format 1_0 to receive an RAR scheduled by a PDCCH scrambled by a random access single cell radio network temporary identity (Random Access Single Cell Radio Network Temporary Identity RA-RNTI). If a preamble index (preamble index) in the RAR is the same as a preamble index sent by the UE, it is considered that the RAR is successfully received. In this case, the UE can stop monitoring the RAR and send the Msg.3 based on an instruction of grant carried in the RAR. The Msg.3 is transmitted on uplink shared channel (Uplink Shared Channel, UL-SCH), and a hybrid automatic repeat request (Hybrid Automatic Repeat Request, HARQ) is used. A temporary cell single cell radio network temporary identity (Temporary Cell Single Cell Radio Network Temporary Identity, TC - RNTI) indicated by the RAR is used to scramble the PDCCH, and the DCI format 1_0 is used to schedule retransmission of the Msg.3. The Msg.3 needs to contain one piece of important information: an unique mark of each UE. This mark is used for the contention resolution in step 4. After receiving the Msg.3, the network uses the PDCCH scrambled by the TC-RNTI to schedule the Msg 4. When the UE successfully decodes an UE contention resolution identity (UE Contention Resolution Identity) contained in the Msg 4, and a media access control (Media Access Control, MAC) control element (control element) matches the UE contention resolution identity sent by the Msg.3, the UE considers that the random access is successful and sets a cell single cell radio network temporary identity (Cell Single Cell Radio Network Temporary Identity, C-RNTI) of the UE to a TC-RNTI, that is, completes a 4-step random access.

A grant field carried in the RAR are shown in Table 1.

**Table 1: The grant field (RAR grant field) carried in the RAR**

| Grant field | Bit quantity |
|---|---|
| Frequency hopping flag | 1 |
| PUSCH frequency domain resource allocation | 14 |
| PUSCH time domain resource allocation | 4 |
| MCS | 4 |
| TPC command for PUSCH | 3 |
| CSI request | 1 |

In Table 1, frequency hopping flag (Frequency hopping flag); physical uplink shared channel (Physical Uplink Shared Channel, PUSCH); frequency resource allocation (frequency resource allocation); time resource allocation (time resource allocation); modulation and coding scheme (Modulation and Coding Scheme, MCS); TPC command for PUSCH (TPC command for PUSCH); transmit power control (Transmit Power Control, TPC); and channel state information (Channel State Information, CSI).

As shown in FIG. 2b, the contention free 4-step random access procedure may include the following steps.

Step 0: Abase station sends a random access preamble assignment (Random Access Preamble Assignment) to UE.

Step 1: The UE sends a message 1 to the base station.

The message (Message, Msg) 1 may be regarded as a random access request and contain a random access preamble (Random Access Preamble).

Step 2: The base station sends a message 2 to the UE.

The message 2 may be regarded as a random access response (Random Access Response, RAR).

As shown in FIG. 3a, the contention based 2-step random access procedure may include the following steps.

Step a: UE sends a message A to a base station.

The Msg A may include a random access preamble (Random Access Preamble) and a PUSCH payload (payload).

Step b: The base station sends a message B to the UE.

The Msg B may include a contention resolution.

The contention based 2-step random access procedure is described as follows.

In a 2-step RACH procedure, UE first sends a Msg A, the Msg A consists of a physical random access channel (Physical Random Access Channel, PRACH) preamble and a PUSCH. Transmission information of the PUSCH may include UE identity information. After receiving the Msg A sent by the UE, a network sends a Msg B to the UE. The network uses a DCI format 1_0 to schedule a physical downlink shared channel (Physical Downlink Shared Channel, PDSCH) through a PDCCH scrambled by a Msg B-RNTI. The PDSCH may contain an UE-ID. After detecting an UE ID sent in the MSG-A, the UE considers that contention is resolved successfully, and feeds back a positive HARQ answer (Ack) of the Msg B to the network.

Refer to FIG. 4 for time domain resource allocation of a Msg A. FIG. 4 shows allocation of a time domain resource of a Msg A PUSCH relative to a Msg A preamble. In FIG. 4, a PRACH configuration period (PRACH Configuration Period); PRACH occasion (PRACH Occasion, RO); and PUSCH occasion (PUSCH Occasion, PO).

The time domain resource of the Msg A PUSCH can be allocated in a plurality of consecutive slots (slot), and the first PUSCH transmission occasion (transmission occasion) in each slot has the same start symbol and length. In addition, each slot can have a plurality of PUSCH transmission occasions. The first slot of the first PUSCH is located after a start slot of the PRACH, and is separated by a plurality of slots. This can be regarded as a time offset (Time Offset). It should be noted that a plurality of orthogonal frequency division multiplex (Orthogonal Frequency Division Multiplex, OFDM) symbols are spaced between transmission occasions of two adj acent PUSCHs in one slot. These symbols are called guard periods (Guard Period, GP), mainly to reduce an impact of uncertainty of timing advance on a physical uplink shared channel (Physical Uplink Shared Channel, PUSCH) performance.

As shown in FIG. 3b, the contention free 2-step random access procedure may include the following steps.

Step 0: A base station sends a random access preamble and PUSCH assignment (Random Access Preamble and PUSCH Assignment) to UE.

Step a: UE sends a message a to a base station.

The Msg A may include a random access preamble (Random Access Preamble) and a PUSCH payload (payload).

Step b: The base station sends a message B to the UE.

The message B may be regarded as a random access response (Random Access Response, RAR).

### 2. Frequency hopping of the Msg.3 and the Msg. A PUSCH.

The frequency hopping mode supported by the Msg.3 and the Msg. A PUSCH may include intra-slot frequency hopping (intra-slot Frequency Hopping, intra-slot FH).

In this embodiment of this application, an unavailable time domain resource may be an invalid resource or a resource configured for downlink transmission, but is not limited thereto.

Referring to FIG. 5, FIG. 5 is a flowchart of a random access method according to an embodiment of this application. The random access method in this embodiment of this application may be applied to a terminal.

As shown in FIG. 5, the random access method includes the following steps.

Step 501: Perform a repetition of target information in a target random access procedure, where the target information includes a physical uplink shared channel PUSCH.

In this embodiment of this application, the target random access procedure may be the foregoing 4-step random access procedure, 2-step random access procedure or another random access procedure. Types of the target random access procedure are not limited in this embodiment of this application. A quantity of the repetition of the target information are greater than 1, which can be determined according to an actual situation. This is not limited in this embodiment of this application.

In a specific implementation, the performing a repetition of a PUSCH in a target random access procedure may specifically be: performing a repetition of a message sent through a PUSCH in the target random access procedure, or performing a repetition of a PUSCH contained in a message in the target random access procedure.

Optionally, the performing a repetition of target information in a target random access procedure includes at least one of the following:
performing a repetition of a message 3 in a 4-step random access procedure; and
performing a repetition of a PUSCH contained in a message A in a 2-step random access procedure.

In this optional implementation, in the 4-step random access procedure, a PUSCH contained in the target information may be the Msg.3. In the 2-step random access procedure, the PUSCH contained in the target information may be the PUSCH contained in the Msg A.

In this embodiment of this application, a terminal supports performing a repetition of target information in a target random access procedure. In a specific implementation, the terminal's behavior of performing a repetition of target information in a target random access procedure can be agreed by a network-side device or a protocol.

In the random access method of this embodiment of this application, a terminal can perform a repetition of target information in a target random access procedure, where the target information includes a physical uplink shared channel PUSCH. In this way, uplink coverage of a PUSCH in a target random access procedure of a terminal can be enhanced, thereby reducing delay of the terminal in completing the target random access procedure.

In this embodiment of this application, a quantity of repetition of a PUSCH contained in the target information can be determined in a plurality of methods, and specifically described as follows.

Optionally, a quantity of a repetition of the PUSCH satisfies any one of the following:
being configured by system information sent by a network-side device;
being configured by radio resource control RRC (Radio Resource Control, RRC) information sent by the network-side device;
being agreed by a protocol;
being the same as a quantity of a nominal repetition of a preamble in the target random access procedure;
being the same as a quantity of an actual repetition of the preamble in the target random access procedure; and
being indicated by physical layer signaling.

Specific descriptions are as follows.

For ease of description, a quantity of a repetition of the PUSCH described below is recorded as M, where M is an integer greater than 1.

In a case that a value of the M is configured by system information, RRC, or a protocol, optionally, if only the system information is configured with the value of the M, the value of the M is used as a quantity of the repetition of the PUSCH; if both the system information and the RRC information are configured with the value of the M, the value of the M configured with the RRC are used as the quantity of the repetition of the PUSCH; and if neither the system information nor the RRC information is configured with the value of the M, a default value is used, that is, the value of the M agreed by the protocol is used as the quantity of the repetition of the PUSCH.

In a case that the value of the M is the same as a quantity of the nominal or actual repetition of the preamble in the target random access procedure, the terminal supports a repetition of the preamble in the target random access procedure. The quantity of the repetition of the preamble may be configured by the system information configuration, configured by the RRC, or agreed by the protocol, but this is not limited thereto.

The quantity of the nominal repetition of the preamble may be understood as a quantity of a repetition configured by the preamble, but the terminal may abandon performing some repetitions when performing a repetition of the preamble. Therefore, the quantity of the repetition of the preamble actually performed by the terminal, that is, the quantity of actual repetition of the preamble, is smaller than or equal to the quantity of the nominal repetition of the preamble. It can be seen that the quantity of the nominal repetition of the preamble includes repetitions that are discarded because transmission resources of the preamble are unavailable. The quantity of the actual repetition of the preamble does not include repetitions that are discarded because transmission resources of the preamble are unavailable.

For ease of understanding, example descriptions are as follows:
The system information configures 4 repetitions of the preamble, which are recorded as a preamble 1, a preamble 2, a preamble 3, and a preamble 4. If a transmission resource of the preamble 3 conflicts with transmission of a downlink synchronization signal and PBCH block (Synchronization Signal and PBCH block, SSB, SSB), transmission of the preamble 3 is discarded. In this example, the quantity of the nominal repetitions of the preamble is 4, and the actual quantity of actual repetitions is 3. Therefore, if the value of the M is the same as the quantity of the nominal repetition of the preamble in the target random access procedure, the M=4. If the value of the M is the same as the quantity of the actual repetition of the preamble in the target random access procedure, the M=3.

In a case that a value of M is indicated by physical layer signaling (that is, layer 1 (L1) signaling), optionally, the quantity of the repetition of the PUSCH satisfies at least one of the following:
(a) that the quantity of the repetition of the PUSCH is indicated by a first field newly added in the physical layer signaling; and
(b) that the quantity of the repetition of the PUSCH is indicated by some bit of a second field in the physical layer signaling.

Specific descriptions are as follows.

In a case that the value of the M meets (a), the physical layer signaling newly adds a first field, and the first field is used to indicate the quantity of the repetition of the PUSCH. The first field can be jointly coded with other existing fields of the physical layer signaling.

Optionally, the first field can be jointly coded with a time domain resource assignment (Time Domain Resource Assignment, TDRA) field. When a higher layer configures a TDRA (Time Domain Resource Allocation) table, the higher layer can also configure the quantity of the repetition of the PUSCH for each row index, that is, the value of the M.

For ease of understanding, the following describes with reference to examples in table 2 below.

**Table 2: Joint coding of first domain and TDRA field**

| Row index | PUSCH mapping type | K2 | S | L | M |
|---|---|---|---|---|---|
| 1 | Type A | 1 | 0 | 14 | 1 |
| 2 | Type A | 1 | 0 | 12 | 1 |
| 3 | Type A | 1 | 0 | 8 | 1 |
| 4 | Type B | 1 | 2 | 6 | 2 |
| 5 | Type B | 2 | 4 | 4 | 4 |
| 6 | Type B | 2 | 4 | 4 | 6 |
| 7 | Type B | 2 | 4 | 2 | 8 |
| ... ... | | | | | |

In table 2, PUSCH mapping type (PUSCH mapping type).

In a case that the value of the M meets (b), some bit of the second field in the physical layer signaling can be multiplexed to indicate the quantity of the repetition of the PUSCH. Optionally, the most significant bit (the Most Significant Bit, MSB) or the least significant bit (Least Significant Bit, LSB) of x-bit of the second field can be used to indicate the value of the M. Optionally, the second field may be a frequency resource allocation (frequency resource allocation) field or a MCS field, but is not limited thereto.

For ease of understanding, example descriptions with reference to table 3 are as follows:

**Table 3: MCS field**

| MCS field does not indicate M | 2-bit MSB indicates M | 2-bit LSB indicates M |
|---|---|---|
| MCS | (M, MCS) | (MCS, M) |

In Table 3, the MCS field can include 5 bits. Specifically, it is shown as follows: (a4, a3, a2, a1, a0). In a case that the MCS field does not indicate the M, the MCS field is only used to indicate the MCS. In a case that 2-bit MSB of the MCS field is used to indicate the M, the MCS field can be used to indicate the M and the MCS. Specifically, a4 and a3 can be used to indicate the M. In a case that 2-bit LSB of the MCS field is used to indicate the M, the MCS field can be used to indicate the M and the MCS. Specifically, a1 and a0 can be used to indicate the M.

In addition, in this embodiment of this application, optionally, the PUSCH includes at least one of an initially-transmitted PUSCH and a retransmitted PUSCH.

In a case that the quantity of the repetition of the PUSCH is indicated by the physical layer signaling, the quantity of the repetition of the PUSCH satisfies at least one of the following:
that a quantity of a repetition of the initially-transmitted PUSCH is indicated by uplink grant in a random access response RAR or by a physical downlink control channel PDCCH command that triggers the target random access; and
that a quantity of a repetition of the retransmitted PUSCH is indicated by a downlink control information DCI format 1_0 scrambled by a temporary cell radio network temporary identity TC-RNTI.

Specific descriptions are as follows:
In a case that the target random access procedure is a 4-step random access procedure, the quantity of the repetition of the initially-transmitted PUSCH may be indicated by uplink grant in an RAR; and the quantity of the repetition of the retransmitted PUSCH is indicated by a DCI format 1_0 scrambled by a TC-RNTI.

In a case that the target random access procedure is a 2-step random access procedure, the quantity of the repetition of the initially-transmitted PUSCH is indicated by a PDCCH command that triggers the target random access; and the quantity of the repetition of the retransmitted PUSCH is indicated by a DCI format 1_0 scrambled by a TC-RNTI.

It can be understood that the quantity of the repetition of the initial-transmitted PUSCH may be equal to or unequal to the quantity of the repetition of the retransmitted PUSCH. A sum of the quantity of the repetition of the initial-transmitted PUSCH and the quantity of the repetition of the retransmitted PUSCH may be equal to the foregoing value of the M.

In this embodiment of this application, optionally, the target information further includes a preamble.

In other words, the terminal can also support the repetition of the preamble of the target random access procedure. In this case, the performing a repetition of target information in a target random access procedure includes: performing a repetition of a PUSCH in a target random access procedure; and performing a repetition of a preamble in a target random access procedure.

It should be understood that the terminal's behavior of performing a repetition of a preamble in a target random access procedure can be configured by a network-side device or agreed by a protocol.

In a specific implementation, the performing a repetition of a preamble in a target random access procedure may specifically be: performing a repetition of a message that contains a preamble in the target random access procedure, or performing a repetition of a preamble contained in a message in the target random access procedure.

Optionally, the performing a repetition of a preamble in a target random access procedure may include any one of the following: performing a repetition of a message 1 in a 4-step random access procedure; and performing a repetition of a preamble contained in a message A in a 2-step random access procedure.

In this optional implementation, in the 4-step random access procedure, the preamble contained in the target information may be the Msg 1. In the 2-step random access procedure, the preamble contained in the target information may be the preamble contained in the Msg A.

In a case that the target random access procedure is a 2-step random access procedure, the repetition of the PUSCH and the preamble may be performed by performing a repetition of the Msg A. The following describes repetition rules of the PUSCH and the preamble in the 2-step random access procedure.

Optionally, the repetition rule of the target information includes any one of the following:
Rule 1: Perform a repetition in combination pairs, where each combination pair includes one preamble and one PUSCH;
Rule 2: A repetition of the preamble being before the repetition of the PUSCH; and
Rule 3: Perform a repetition of the preamble and the PUSCH in a crossed manner.

In a specific implementation, rule 1, rule 2, and rule 3 may be configured by a network-side device or predetermined by a protocol, which can be determined according to an actual situation. This is not limited in this embodiment of this application.

The foregoing three rules are described as follows.

For ease of description, transmission of a preamble is recorded as RO, and transmission of a PUSCH is recorded as PO.

In rule 1, one RO and one PO form a pair of {RO, PO}, and then repetitions of a plurality of pairs of {RO, PO} are performed, such as {RO, PO, RO, PO,..., RO, PO}.

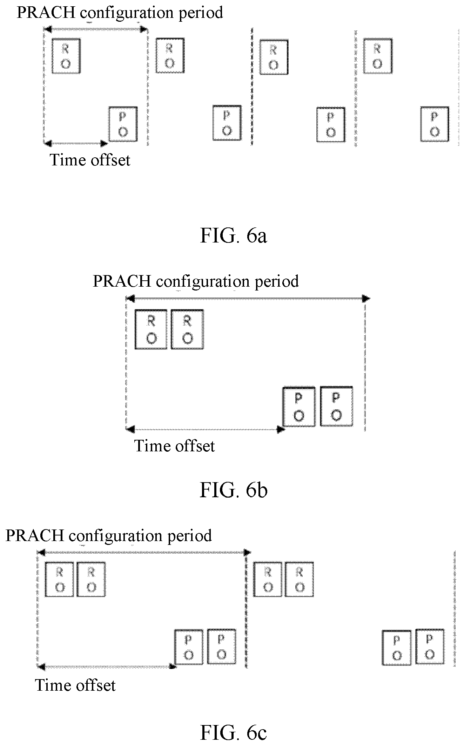

For ease of understanding, refer to FIG. 6a. In FIG. 6a, the terminal transmits four pairs of {RO, PO}.

In rule 2, all ROs are considered as a whole, and all POs are considered as a whole. First, all the ROs are transmitted, and then all the POs are transmitted, such as {RO, RO, PO, PO, PO, PO}.

For ease of understanding, refer to FIG. 6b. In FIG. 6b, a quantity of ROs and the POs are both 2. The terminal transmits two ROs first, and then two POs.

In rule 3, all ROs are divided into at least two RO groups, and all POs are divided into at least one PO group. Each RO group may include one or more ROs, and each PO group may include one or more POs. Transmission may be performed in a sequence: a first RO group, a first PO group, a second RO group and so on, until transmission of all RO groups and all PO groups are completed, such as {RO, RO, PO, PO, PO, RO, RO, PO, PO, PO}.

For ease of understanding, refer to FIG. 6c. In FIG. 6c, each RO group includes two ROs, and each PO group includes two POs. The terminal performs transmission of two RO groups and two PO groups in a crossed manner.

In this embodiment of this application, in an optional implementation, time-frequency resources of the repetition of the target information do not overlap. To be specific, time domain resources of the RO and the PO do not overlap. In another optional implementation, the repetition of the target information satisfies time division multiplexing (Time Division Multiplexing, TDM).

In another optional implementation, in a case that time-frequency resources or frequency domain resources whose present at least two repetitions overlap in a repetition of the target information, the at least two repetitions satisfy any one of the following:
executing a first repetition and abandoning an execution of a second repetition.

The second repetition is another repetition except the first repetition in the at least two repetitions.

In this optional implementation, for the at least two repetitions of the time-frequency resources that overlap, a terminal can perform only one of the at least two repetitions and abandon other repetitions. The first repetition may be any repetition in the at least two repetitions.

Optionally, the first repetition satisfies any one of the following:
that a transmission time configured by the first repetition is before the second repetition;
that a transmission time configured by the first repetition is after the second repetition; and
that the first repetition is determined by the terminal.

In a case that a transmission time configured by the first repetition is before the second repetition, the first repetition is a repetition that first appears in the at least two repetitions. In a case that a transmission time configured by the first repetition is after the second repetition, the first repetition is a repetition that last appears in the at least two repetitions. In the above case, the first repetition can be configured by a network side or agreed by a protocol.

In a case that the first repetition is determined by the terminal, the terminal can decide to transmit any repetition of the at least two repetitions. A network-side device can perform blind detection on the time-frequency resources whose present at least two repetitions to detect the first repetition.

In this embodiment of this application, a time domain resource of a repetition is scheduled. In an optional implementation, time domain resources configured by a repetition of the target information may all be available time domain resources. In this way, an implementation of the repetition of the target information can be guaranteed, thereby improving reliability of transmission of the target information.

Optionally, using a preamble contained in the target information as an example, optionally, a time-domain resource configured by a repetition of the preamble satisfies any one of the following:
time-domain resources configured by all repetitions are available time-domain resources; and
time-domain resources configured by the first repetition are available time-domain resources.

In another optional implementation, the time domain resources configured by the repetition of the target information may include unavailable time domain resources. In this case, the terminal can perform the repetition of the target information in the following methods.

Optionally, the repetition of the target information satisfies any one of the following:
Method 1: In a case that there is an unavailable time-domain resource in a time-domain resource configured by a third repetition, abandon an execution of the third repetition; and
Method 2: In a case that there is an unavailable time-domain resource in a time-domain resource configured by a third repetition, postpone an execution of the third repetition, where time-domain resources occupied by the third repetition postponed for execution are all available time-domain resources.

In method 1, when a configured time domain resource includes a repetition of the unavailable time domain resource, the terminal can directly abandon the repetition.

In method 2, when the configured time domain resource includes the repetition of the unavailable time domain resource, the terminal can postpone the repetition.

Optionally, the postponing an execution of the third repetition includes any one of the following:
postponing an execution of the third repetition and a fourth repetition; and
executing the third repetition after the fourth repetition.

The fourth repetition includes all repetitions whose time-domain resource is configured after the third repetition.

In an implementation in which an execution of the third repetition and a fourth repetition is postponed, the terminal can consider the third repetition and subsequent repetitions as a whole, and then postpone transmission of the whole. It should be understood that if configured time domain resources include a repetition of unavailable time domain resources in the fourth repetition, the repetition may be regarded as a new third repetition, other repetitions except the repetition may be regarded as a new fourth repetition, and then the new third repetition and the new fourth repetition is postponed for execution. For ease of understanding, example descriptions are as follows:
It is assumed that the terminal is configured to transmit four POs: PO1, PO2, PO3, and PO4. If transmission resources of the PO2 include unavailable resources, the terminal can postpone transmission of PO2, PO3, and PO4.

In an implementation in which the third repetition after the fourth repetition is executed, the terminal can first determine that the configured time domain resources include repetitions of unavailable time domain resources, then perform all repetitions of the configured time domain resources that are available time domain resources, and then start performing repetitions of unavailable time domain resources included in the configured time domain resources on the available time domain resources.

For ease of understanding, example descriptions are as follows:
It is assumed that the terminal is configured to transmit four POs: PO1, PO2, PO3, and PO4. Transmission resources of the PO1 and the PO3 include unavailable resources, so that the terminal can transmit the PO2 and the PO4, and postpone the transmission of the PO1 and the PO3. Then the PO1 and the PO3 are transmitted on the available time-frequency resources after the PO2 and the PO4.

In this embodiment of this application, the repetition of the PUSCH may include a plurality of repetition rules (or repetition types), which are specifically described as follows:
Optionally, a repetition rule of the PUSCH includes any one of the following:
repetition type A: different repetitions are in different slots, and each repetition occupies the same initial time-domain resource in the slot;
repetition type B: all repetitions are continuous in a time-domain resource, and in a case that a first condition is met, a fifth repetition is divided into K sub repetitions;
repetition type C: all the repetitions are continuous in the time-domain resource, there is a guard period in the time domain resource between two adjacent repetitions, and in a case that the first condition is met, the fifth repetition is divided into the K sub repetitions; and
repetition type D: all the repetition are continuous in the time-domain resource, there is a guard period in the time-domain resource between the two adjacent repetitions, and in a case that there is an unavailable time-domain resource in a time-domain resource configured by the fifth repetition, an execution of the fifth repetition is abandoned, or the fifth repetition is postponed for execution.

K is an integer greater than 1.

Optionally, the first condition includes any one of the following:
that the time domain resource configured by the fifth repetition crosses a slot boundary; and
that there is an unavailable time-domain resource in the time-domain resource configured by the fifth repetition.

The following describes each of the foregoing repetition types.

For repetition type A, M repetitions are located in M slots, and time resources (start position of transmission) occupied by data transmission in each slot are the same. Optionally, the M repetitions can use 1 layer (single-layer) transmission.

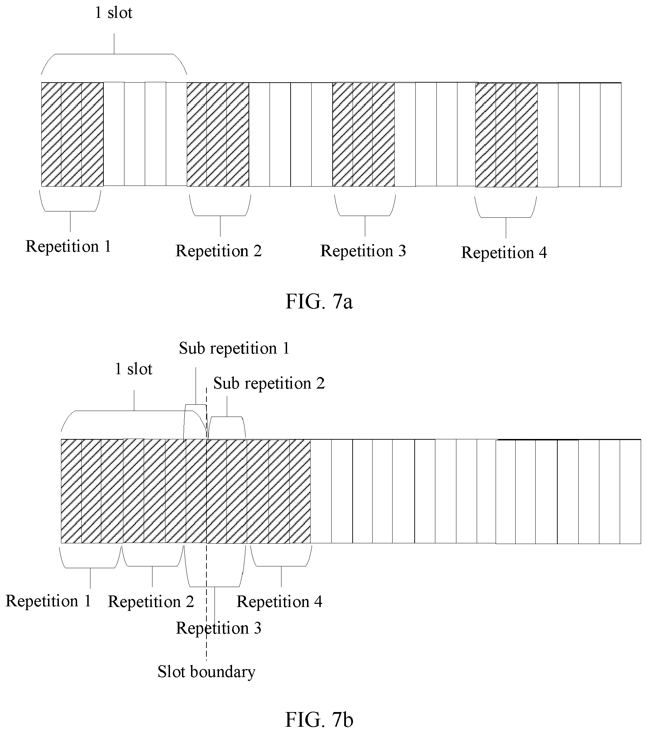

For ease of understanding, refer to FIG. 7a. In FIG. 7a, 4 repetitions are in 4 slots, and each repetition occupies the same time-domain resource in the slot.

For repetition type B, all repetitions are continuous in time domain resources. This can be understood as that all repetitions are continuous in available time domain resources. If a time domain resource configured for one repetition meets a first condition, that is, a slot boundary is crossed, or includes an unavailable time domain resource, the repetition can be divided into K sub repetitions according to the slot boundary or the unavailable time domain resource. In some implementations, the divided repetition can be called a nominal repetition, and the sub repetition generated by the division of the repetition can be called actual repetition. This is not limited thereto.

For ease of understanding, refer to FIG. 7b. In FIG. 7b, 4 repetitions is continuous, and the time domain resource of the third repetition crosses the slot boundary, so that the third repetition can be divided into two sub repetitions, which are recorded as sub repetition 1 and sub repetition 2.

For repetition type C, a difference between the repetition type C and the repetition type B is that there is a guard period in time domain resources between two adjacent repetitions in repetition type C, while there is no guard period in time domain resources between two adjacent repetitions in repetition type B.

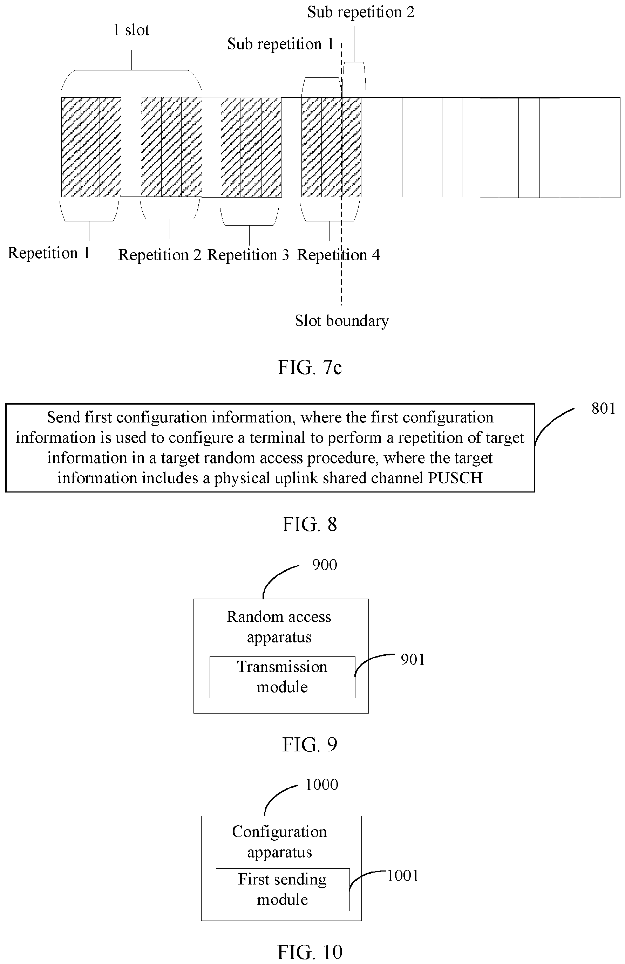

For ease of understanding, refer to FIG. 7c. In FIG. 7c, two adjacent repetitions are continuous and have guard periods, the 4 repetitions are continuous except for the guard periods, and the time domain resource of the fourth repetition crosses the slot boundary. Then the fourth repetition can be divided into two sub repetitions, which are recorded as sub repetition 1 and sub repetition 2.

For repetition type D, the difference between the repetition type D and the repetition type C is that for the configured time-domain resource has the fifth repetition of the unavailable time-domain resource, processing methods are different. Specifically, in the repetition type D, if there is a repetition of the unavailable time domain resource for the configured time domain resource, the execution of the repetition is postponed, or the execution of the repetition is abandoned. The method of postponing the execution of repetitions can be seen in the foregoing description, Details are not described herein again.

A redundant version (Redundant Version, RV) of the PUSCH in this embodiment of this application is described as follows.

Optionally, a redundant version RV of a repetition of the PUSCH is indicated by at least one of system information, RRC information, and physical layer signaling.

Optionally, a redundant version of a repetition of the PUSCH includes at least one of the following:
a RV sequence 1: {0, 2, 3, 1};
a RV sequence 2: {0, 3, 0, 3};
a RV sequence 3: {0, 0, 0, 0};
a RV sequence 4: {a, c, d, b}; and
a RV sequence 5: {a, d, a, d}.

A includes L zeros, b includes L ones, c includes L twos, d includes L threes, and L is a positive integer.

Optionally, a value of the L is equal to a number obtained after rounding down a first ratio or rounding up the first ratio.

The first ratio is a ratio of a quantity of the repetition of the PUSCH to 4.
L=ceil (M/4) or L=floor (M/4).

The following describes the beam of the repetition of the PUSCH in this embodiment of this application.

Optionally, a beam of a repetition of the PUSCH satisfies any one of the following:
being indicated by at least one of system information, RRC information, and physical layer signaling; and
being the same with a beam of a repetition of a preamble.

In a specific implementation, in a scenario, the beam of the repetition of the PUSCH and the beam of the repetition of the preamble may be beams of all the repetitions of the PUSCH and a beam of a repetition of one preamble; and may also be a beam of a part of the repetition of the PUSCH and a beam of a repetition of one preamble, and beams of the repetition of a preamble corresponding to different parts of the repetition are different. This can be determined according to an actual situation, and is not limited in this embodiment of this application. In addition, a beam of the repetition of the PUSCH and a beam of the repetition of the preamble may be configured by the network side or predetermined by the protocol.

Optionally, beams of different repetitions of the PUSCH are the same or different. This may be determined according to an actual situation, and is not limited in this embodiment of this application.

Referring to FIG. 8, FIG. 8 is a flowchart of a configuration method according to an embodiment of this application. The configuration method in this embodiment of this application is applied to a network-side device.

As shown in FIG. 8, the configuration method may include the following steps.

Step 801: Send first configuration information, where the first configuration information is used to configure a terminal to perform a repetition of target information in a target random access procedure, where the target information includes a physical uplink shared channel PUSCH.

In the configuration method in this embodiment of this application, the network-side device can send the first configuration information to the terminal, to configure that the terminal performs the repetition of the target information in the target random access procedure. In this way, after receiving the first configuration information, the terminal performs a repetition of target information in a target random access procedure, where the target information includes a physical uplink shared channel PUSCH. In this way, uplink coverage of a PUSCH in a target random access procedure of a terminal can be enhanced, thereby reducing delay of the terminal in completing the target random access procedure.

Optionally, the PUSCH includes at least one of an initially-transmitted PUSCH and a retransmitted PUSCH.

In a case that the quantity of the repetition of the PUSCH is indicated by the physical layer signaling, the quantity of the repetition of the PUSCH satisfies at least one of the following:
that a quantity of a repetition of the initially-transmitted PUSCH is indicated by uplink grant in a random access response RAR or by a physical downlink control channel PDCCH command that triggers the target random access; and
that a quantity of a repetition of the retransmitted PUSCH is indicated by a downlink control information DCI format 1_0 scrambled by a temporary cell radio network temporary identity TC-RNTI.

Optionally, in a case that the quantity of the repetition of the PUSCH is indicated by the physical layer signaling, the quantity of the repetition of the PUSCH satisfies any one of the following:
that the quantity of the repetition of the PUSCH is indicated by a first field newly added in the physical layer signaling; and
that the quantity of the repetition of the PUSCH is indicated by some bit of a second field in the physical layer signaling.

Optionally, the target information further includes a preamble.

Optionally, in a case that the target random access procedure is a 2-step random access procedure, the method includes:
sending second configuration information, where the second configuration information is used to configure a repetition rule of the target information.

The repetition rule of the target information satisfies any one of the following:
performing a repetition in combination pairs, where each combination pair includes one preamble and one PUSCH;
a repetition of the preamble being before the repetition of the PUSCH; and
performing a repetition of the preamble and the PUSCH in a crossed manner.

Optionally, the method further includes:
sending third configuration information, where the third configuration information is used to configure a repetition rule of the PUSCH.

The repetition rule of the PUSCH includes any one of the following:
that different repetitions are in different slots, and each repetition occupies a same initial time-domain resource in the slot;
that all repetitions are continuous in a time-domain resource, and in a case that a first condition is met, a fifth repetition is divided into K sub repetitions;
that all the repetitions are continuous in the time-domain resource, there is a guard period in the time domain resource between two adjacent repetitions, and in a case that the first condition is met, the fifth repetition is divided into the K sub repetitions; and
that all the repetition are continuous in the time-domain resource, there is a guard period in the time-domain resource between the two adjacent repetitions, and in a case that there is an unavailable time-domain resource in a time-domain resource configured by the fifth repetition, an execution of the fifth repetition is abandoned, or the fifth repetition is postponed for execution.

K is an integer greater than 1.

Optionally, the first condition includes any one of the following:
that the time domain resource configured by the fifth repetition crosses a slot boundary; and
that there is an unavailable time-domain resource in the time-domain resource configured by the fifth repetition.

Optionally, the method further includes:
sending second indication information, where the second indication information is used to indicate a redundant version of a repetition of the PUSCH.

The second indication information includes at least one of the following: system information, RRC information, and physical layer signaling.

Optionally, a redundant version of a repetition of the PUSCH includes at least one of the following:
a RV sequence 1: {0, 2, 3, 1};
a RV sequence 2: {0, 3, 0, 3};
a RV sequence 3: {0, 0, 0, 0};
a RV sequence 4: {a, c, d, b}; and
a RV sequence 5: {a, d, a, d}.

A includes L zeros, b includes L ones, c includes L twos, d includes L threes, and L is a positive integer.

Optionally, a value of the L is equal to a number obtained after rounding down a first ratio or rounding up the first ratio.

The first ratio is a ratio of a quantity of the repetition of the PUSCH to 4.

Optionally, the method further includes:
sending third indication information, where the third indication information is used to indicate a quantity of a repetition of the PUSCH.

The third indication information includes at least one of the following: system information, RRC information, and physical layer signaling.

Optionally, beams of different repetitions of the PUSCH are the same or different.

It should be noted that this embodiment is an embodiment of the network-side device corresponding to the foregoing method embodiment in FIG. 5. Therefore, reference can be made to the related description in the method embodiment shown in FIG. 5, and the same beneficial effect can be achieved. To avoid repetition of description, details are not described herein again.

It should be noted that the plurality of optional implementations described in this embodiment of this application may be implemented in combination with each other or may be implemented separately. This is not limited in this embodiment of this application.

For ease of understanding, example descriptions are as follows:

RedCap UE supports 4-step RACH Msg.3 and/or M (M>1) repetitions of 2-step RACH Msg A PUSCH.

### 1. Determination of M

(1). M is determined by system information and/or RRC information
   Optionally, if only the system information is configured with the M, a value of the M is used; if both the system information and the RRC are configured with the value of the M, the value of the M configured by the RRC is used; and if the system information and the RRC are not configured with the value of the M, the value of the M uses a default value. This value can be predefined as 1 or another integer greater than 1.
(2). Quantities of nominal or actual repetition of the M and the PRACH preamble, that is, Msg.1/Preamble, are the same.

The quantity of nominal transmission includes transmission discarded due to unavailable transmission resources of the Msg.1/Preamble. The quantity of actual transmission does not include transmission discarded due to unavailable transmission resources of the Msg.1/Preamble.

For example, the system information configures 4 repetitions of the Msg.1/Preamble, which are recorded as Msg.1#1, Msg.1#2, Msg.1#3, and Msg.1#4. A transmission resource of Msg.1#3 conflicts with downlink SSB transmission, so that the transmission of Msg.1#3 is discarded. In this example, the quantity of nominal transmissions is 4 and the quantity of actual transmissions is 3.

(3). M may be dynamically indicated by L1, that is, physical layer signaling.

For initial transmission of Msg.3, M is indicated by RAR grant.

For retransmission of Msg.3, M is indicated by DCI format 1_0 scrambled by TC-RNTI.

Solution 1: Indicates joint coding of a field of M and other fields.

Solution 2: Compress a bit quantity of other fields to make room for indicating M.

### 2. Time frequency resource allocation of repetitions of PRACH and Msg. A

Based on capabilities of RedCap UE, for a repetition of 2-step RACH Msg. A, a base station configures the following time-domain resource allocation structure for any RACH Occupation (RO) and PUSCH Occupation (PO):
(1). 2-step RACH structure #1: ARO and a PO form a pair, and then repetitions of M pairs of {RO, PO} are performed, such as {RO, PO, RO, PO, ..., RO, PO}.

UE does not expect the configured M pairs of {RO, PO} to partial or fully overlap on resources, or if M pairs of {RO, PO} partially or fully overlap on resources:
then, based on the time resources of RO or PO, UE transmits {RO, PO} that appears first or later in time, and discards {RO, PO} that appears later or first in time; or, which {RO, PO} is transmitted depends on an implementation of the UE.

(2). 2-step RACH structure#2: First perform a repetition of N ROs consecutively, then perform a repetition of M POs consecutively, such as N=2, M=4, and m {RO, RO, PO, PO, PO, PO}.

Optional, the N may be equal to the M.

UE does not expect the configured N ROs and/or M POs to partial or fully overlap on resources, or if N ROs and/or M POs partially or fully overlap on resources:
then, based on the time resources of RO or PO, the UE transmits RO or PO that appears first or later in time, and discards RO or PO that appears later or first in time; or
which RO or PO is transmitted depends on an implementation of the UE.

(3). 2-step RACH structure#3: First, perform repetitions of N1 ROs continuously, then perform repetitions of M1 POs continuously, then perform repetitions of N2 ROs continuously, and then perform repetitions of M2 POs continuously, where N1+N2+...=N, M1+M2+. =M. If N1=N2=2, and M1=M2=3, then {RO, RO, PO, PO, PO, RO, RO, PO, PO, PO}.

Optionally, N1, N2, M1, and M2 may be equal.

UE does not expect the configured N ROs and/or M POs to partial or fully overlap on resources, or if N ROs and/or M POs partially or fully overlap on resources:
then, based on the time resources of RO or PO, the UE transmits RO or PO that appears first or later in time, and discards RO or PO that appears later or first in time; or
which RO or PO is transmitted depends on an implementation of the UE.

Optionally, the repetitions of the plurality of ROs and POs are time division multiplexing (TDM).

### 3. Repetition type of Msg.3 and Msg. A PUSCH

Based on capabilities of the RedCapUE, for repetitions of Msg.3 and Msg A PUSCH, repetition Type A and repetition Type B can be supported. In particular, repetition type C and repetition type D are supported for the repetition of the PUSCH in 2-step RACH.

### Repetition type A:

Repetition is based on slots. K repetitions need to occupy K slots. Time resources (start position of transmission) used for data transmission in each slot are the same. Specifically, refer to FIG. 7a.

### Repetition type B:

Sub-slot based repetition is introduced. K nominal repetitions (nominal repetition) can perform continuous transmission "back to back" in one slot. When a time domain resource of a nominal transmission needs to cross a slot boundary or there are invalid and unavailable resources and symbols in the time domain resource, such as downlink symbols, the nominal transmission is divided into a plurality of actual repetitions (actual repetition) by the slot, the invalid resources, and the symbols. Specifically, refer to FIG. 7b.

### Repetition type C:

Similar to repetition type B, one repetition can be divided into a plurality of segmentation when encountering unavailable symbols during continuous repetition. A difference in repetition type B is that the continuous repetition is no longer "back-to-back". To reduce an impact of the uncertainty of timing advance on performance of the PUSCH, a plurality of OFDM symbols are spaced between two adjacent repetitions, called guard period (GP). Specifically, refer to FIG. 7c.

### Repetition type D:

Characteristics of the repetition type D is: in back-to-back continuity, when unavailable symbols are encountered, the repetition is abandoned or postponed. In addition, a plurality of OFDM symbols are spaced between two adjacent repetitions, which are called guard periods (GP).

4. When a repetition of Msg.1/PRACH and Msg.3 and Msg.A is performed, when an unavailable resource is encountered or there is a conflict with other transmissions, a solution is that:
For the repetition of Msg.1/PRACH/Msg.3 and Msg.A PUSCH, if Msg.3 and Msg. A PUSCH uses either repetition type A or repetition type D, and one of resources of the repetition is unavailable, then:
the transmission is abandoned, or
the transmission is postponed and carried out on a next available resource.

In particular, for M repetitions of Msg.1/PRACH, the determination of effective resources of the M repetitions always excludes the invalid resources of the semi static configuration, such as downlink symbols. Alternatively, for the first transmission of M repetitions of Msg.1/PRACH, the determination of the effective resources of the first transmission always excludes the invalid resources of the semi static configuration.

### 5. Redundant version is applied to the repetition of Msg A PUSCH/Msg.3

The system information and/or RRC and/or L1, that is, physical layer signaling, indicate any of the following redundant versions (RV) of the repetition of Msg A PUSCH/Msg.3:
a RV sequence 1: {0, 2, 3, 1};
a RV sequence 2: {0, 3, 0, 3};
a RV sequence 3: {0, 0, 0, 0};
a RV sequence 4: {(0, 0, ..., 0), (2, 2, ..., 2), (3, 3, ..., 3), (1, 1, ..., 1)}; and
a RV sequence 5: {(0, 0, ..., 0), (3, 3, ..., 3), (0, 0, ..., 0), (3, 3, ..., 3)}.

For the sequence 4 and the sequence 5, where (x, x,... x), a quantity of x=ceil (M/4) or =floor (M/4).

### 6. Beams of each repetition of Msg. A PUSCH/Msg.3

Option 1: The beam direction is indicated by system information and/or RRC and/or L1, that is, physical layer signaling, or
Option 2: Abeam of each repetition of Msg. APUSCH/Msg.3 is the same as a beam of transmission of the PRACH.

For option 1 and option 2, transmission of M (M>1) Msg. APUSCH/Msg.3 can be carried out using the same beam or different beams.

In this embodiment of this application, when the terminal initiates a 4-step RACH or a 2-step RACH, a defined rule supports M (M>1) repetitions. This includes: determination of M; Msg. A (PRACH+PUSCH), and repetition time-domain resource structure thereof; repetition types of Msg.3 and Msg. A; a redundant version of the repetition; and a quasi co-location (Quasi co-location, QCL) of the repetition of Msg.3 and Msg. A.

Through this embodiment of this application, uplink coverage of PRACH Msg.3 and Msg. A PUSCH can be enhanced, to reduce delay for a user to complete a PRACH procedure.

It should be noted that an execution subject of the random access method provided in this embodiment of this application may be a random access apparatus, or a control module configured to execute the random access method in the random access apparatus. In this embodiment of this application, the random access apparatus provided in this embodiment of this application is described by using an example in which the random access method is implemented by the random access apparatus.

Referring to FIG. 9, FIG. 9 is a structural diagram of a random access apparatus according to an embodiment of this application.

As shown in FIG. 9, the random access apparatus 900 includes:
a transmission module 901, configured to perform a repetition of target information in a target random access procedure, where the target information includes a physical uplink shared channel PUSCH.

Optionally, the transmission module 901 is specifically configured for at least one of the following:
performing a repetition of a message 3 in a 4-step random access procedure; and
performing a repetition of a PUSCH contained in a message A in a 2-step random access procedure.

Optionally, a quantity of a repetition of the PUSCH satisfies any one of the following:
being configured by system information sent by a network-side device;
being configured by radio resource control RRC information sent by the network-side device;
being agreed by a protocol;
being the same as a quantity of a nominal repetition of a preamble in the target random access procedure;
being the same as a quantity of an actual repetition of the preamble in the target random access procedure; and
being indicated by physical layer signaling.

Optionally, the PUSCH includes at least one of an initially-transmitted PUSCH and a retransmitted PUSCH.

In a case that the quantity of the repetition of the PUSCH is indicated by the physical layer signaling, the quantity of the repetition of the PUSCH satisfies at least one of the following:
that a quantity of a repetition of the initially-transmitted PUSCH is indicated by uplink grant in a random access response RAR or by a physical downlink control channel PDCCH command that triggers the target random access; and
that a quantity of a repetition of the retransmitted PUSCH is indicated by a downlink control information DCI format 1_0 scrambled by a temporary cell radio network temporary identity TC-RNTI.

Optionally, in a case that the quantity of the repetition of the PUSCH is indicated by the physical layer signaling, the quantity of the repetition of the PUSCH satisfies any one of the following:
that the quantity of the repetition of the PUSCH is indicated by a first field newly added in the physical layer signaling; and
that the quantity of the repetition of the PUSCH is indicated by some bit of a second field in the physical layer signaling.

Optionally, the target information further includes a preamble.

Optionally, in a case that the target random access procedure is a 2-step random access procedure, a repetition rule of the target information includes any one of the following:
performing a repetition in combination pairs, where each combination pair includes one preamble and one PUSCH; a repetition of the preamble being before the repetition of the PUSCH; and
performing a repetition of the preamble and the PUSCH in a crossed manner.

Optionally, a time-frequency resource of a repetition of the target information does not overlap.

Optionally, in a case that time-frequency resources whose present at least two repetitions overlap in a repetition of the target information, the at least two repetitions satisfy any one of the following:
executing a first repetition and abandoning an execution of a second repetition.

The second repetition is another repetition except the first repetition in the at least two repetitions.

Optionally, the first repetition satisfies any one of the following:
that a transmission time configured by the first repetition is before the second repetition;
that a transmission time configured by the first repetition is after the second repetition; and
that the first repetition is determined by the terminal.

Optionally, the repetition of the target information satisfies time-division multiplexing.

Optionally, the repetition of the target information satisfies any one of the following:
in a case that there is an unavailable time-domain resource in a time-domain resource configured by a third repetition, abandoning an execution of the third repetition; and
in a case that there is an unavailable time-domain resource in a time-domain resource configured by a third repetition, postponing an execution of the third repetition, where time-domain resources occupied by the third repetition postponed for execution are all available time-domain resources.

Optionally, the postponing an execution of the third repetition includes any one of the following:
postponing an execution of the third repetition and a fourth repetition; and
executing the third repetition after the fourth repetition.

The fourth repetition includes all repetitions whose time-domain resource is configured after the third repetition.

Optionally, a time-domain resource configured by a repetition of the preamble satisfies any one of the following:
time-domain resources configured by all repetitions are available time-domain resources; and
time-domain resources configured by the first repetition are available time-domain resources.

Optionally, a repetition rule of the PUSCH includes any one of the following:
that different repetitions are in different slots, and each repetition occupies a same initial time-domain resource in the slot;
that all repetitions are continuous in a time-domain resource, and in a case that a first condition is met, a fifth repetition is divided into K sub repetitions;
that all the repetitions are continuous in the time-domain resource, there is a guard period in the time domain resource between two adjacent repetitions, and in a case that the first condition is met, the fifth repetition is divided into the K sub repetitions; and
that all the repetition are continuous in the time-domain resource, there is a guard period in the time-domain resource between the two adjacent repetitions, and in a case that there is an unavailable time-domain resource in a time-domain resource configured by the fifth repetition, an execution of the fifth repetition is abandoned, or the fifth repetition is postponed for execution.K is an integer greater than 1.

Optionally, the first condition includes any one of the following:
that the time domain resource configured by the fifth repetition crosses a slot boundary; and
that there is an unavailable time-domain resource in the time-domain resource configured by the fifth repetition.

Optionally, a redundant version RV of a repetition of the PUSCH is indicated by at least one of system information, RRC information, and physical layer signaling.

Optionally, a redundant version of a repetition of the PUSCH includes at least one of the following:
a RV sequence 1: {0, 2, 3, 1};
a RV sequence 2: {0, 3, 0, 3};
a RV sequence 3: {0, 0, 0, 0};
a RV sequence 4: {a, c, d, b}; and
a RV sequence 5: {a, d, a, d}.

A includes L zeros, b includes L ones, c includes L twos, d includes L threes, and L is a positive integer.

Optionally, a value of the L is equal to a number obtained after rounding down a first ratio or rounding up the first ratio.

The first ratio is a ratio of a quantity of the repetition of the PUSCH to 4.

Optionally, a beam of a repetition of the PUSCH satisfies any one of the following:
being indicated by at least one of system information, RRC information, and physical layer signaling; and
being the same with a beam of a repetition of a preamble.

Optionally, beams of different repetitions of the PUSCH are the same or different.

The random access apparatus in this embodiment of this application may be an apparatus, a component, an integrated circuit, or a chip in a terminal. The apparatus may be a mobile terminal, or a non-mobile terminal. For example, the mobile terminal may include but is not limited to the foregoing listed types of terminals 11. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The random access apparatus in this embodiment of this application may be an apparatus with an operating system. The operating system may be an Android (Android) operating system, an iOS operating system, or another possible operating system, which is not specifically limited in the embodiments of this application.

The random access apparatus 900 provided in this embodiment of this application can implement the processes implemented in the method embodiment in FIG. 5, with the same technical effects achieved. To avoid repetition, details are not described herein again.

It should be noted that an execution subject of the configuration method provided in this embodiment of this application may be a configuration apparatus, or a control module in the configuration apparatus for executing the configuration method. In this embodiment of this application, an example in which the configuration method is implemented by the configuration apparatus is used to describe the configuration apparatus provided in this embodiment of this application.

Referring to FIG. 10, FIG. 10 is a structural diagram of a configuration apparatus according to an embodiment of this application.

As shown in FIG. 10, the configuration apparatus 1000 includes:
a first sending module 1001, configured to send first configuration information, where the first configuration information is used to configure a terminal to perform a repetition of target information in a target random access procedure, where the target information includes a physical uplink shared channel PUSCH.

Optionally, the first configuration information is used to configure at least one of the following:
that a terminal performs a repetition of a message 3 in a 4-step random access procedure; and
that the terminal performs a repetition of a PUSCH contained in a message A in a 2-step random access procedure.

Optionally, the configuration apparatus 1000 further includes:
a second sending module, configured to send first indication information, where the first indication information is used to indicate a quantity of a repetition of the PUSCH.

The first indication information includes at least one of the following: system information, RRC information, and physical layer signaling.

Optionally, the PUSCH includes at least one of an initially-transmitted PUSCH and a retransmitted PUSCH.

In a case that the quantity of the repetition of the PUSCH is indicated by the physical layer signaling, the quantity of the repetition of the PUSCH satisfies at least one of the following:
that a quantity of a repetition of the initially-transmitted PUSCH is indicated by uplink grant in a random access response RAR or by a physical downlink control channel PDCCH command that triggers the target random access; and
that a quantity of a repetition of the retransmitted PUSCH is indicated by a downlink control information DCI format 1_0 scrambled by a temporary cell radio network temporary identity TC-RNTI.

Optionally, in a case that the quantity of the repetition of the PUSCH is indicated by the physical layer signaling, the quantity of the repetition of the PUSCH satisfies any one of the following:
that the quantity of the repetition of the PUSCH is indicated by a first field newly added in the physical layer signaling; and
that the quantity of the repetition of the PUSCH is indicated by some bit of a second field in the physical layer signaling.

Optionally, the target information further includes a preamble.

Optionally, in a case that the target random access procedure is a 2-step random access procedure, the configuration apparatus 1000 further includes:
a third sending module, configured to send second configuration information, where the second configuration information is used to configure a repetition rule of the target information.

The repetition rule of the target information satisfies any one of the following:
performing a repetition in combination pairs, where each combination pair includes one preamble and one PUSCH;
a repetition of the preamble being before the repetition of the PUSCH; and
performing a repetition of the preamble and the PUSCH in a crossed manner.

Optionally, the configuration apparatus 1000 further includes:
a fourth sending module, configured to send third configuration information, where the third configuration information is used to configure a repetition rule of the PUSCH.

The repetition rule of the PUSCH includes any one of the following:
that different repetitions are in different slots, and each repetition occupies a same initial time-domain resource in the slot;
that all repetitions are continuous in a time-domain resource, and in a case that a first condition is met, a fifth repetition is divided into K sub repetitions;
that all the repetitions are continuous in the time-domain resource, there is a guard period in the time domain resource between two adjacent repetitions, and in a case that the first condition is met, the fifth repetition is divided into the K sub repetitions; and
that all the repetition are continuous in the time-domain resource, there is a guard period in the time-domain resource between the two adjacent repetitions, and in a case that there is an unavailable time-domain resource in a time-domain resource configured by the fifth repetition, an execution of the fifth repetition is abandoned, or the fifth repetition is postponed for execution.

K is an integer greater than 1.

Optionally, the first condition includes any one of the following:
that the time domain resource configured by the fifth repetition crosses a slot boundary; and
that there is an unavailable time-domain resource in the time-domain resource configured by the fifth repetition.

Optionally, the configuration apparatus 1000 further includes:
a fifth sending module, configured to send second indication information, where the second indication information is used to indicate a redundant version of a repetition of the PUSCH.

The second indication information includes at least one of the following: system information, RRC information, and physical layer signaling.

Optionally, a redundant version of a repetition of the PUSCH includes at least one of the following:
a RV sequence 1: {0, 2, 3, 1};
a RV sequence 2: {0, 3, 0, 3};
a RV sequence 3: {0, 0, 0, 0};
a RV sequence 4: {a, c, d, b}; and
a RV sequence 5: {a, d, a, d}.

A includes L zeros, b includes L ones, c includes L twos, d includes L threes, and L is a positive integer.

Optionally, a value of the L is equal to a number obtained after rounding down a first ratio or rounding up the first ratio.

The first ratio is a ratio of a quantity of the repetition of the PUSCH to 4.

Optionally, the configuration apparatus 1000 further includes:
a sixth sending module, configured to send third indication information, where the third indication information is used to indicate a beam of a repetition of the PUSCH.

The third indication information includes at least one of the following: system information, RRC information, and physical layer signaling.

Optionally, beams of different repetitions of the PUSCH are the same or different.

The configuration apparatus in this embodiment of this application may be an apparatus, or a component, an integrated circuit, or a chip in the network-side device. The network-side device may include, but is not limited to, the types of network-side device 12 listed above, which is not specifically limited in this embodiment of this application.

The configuration apparatus 1000 provided in this embodiment of this application can implement the processes implemented in the method embodiment in FIG. 8, with the same technical effects achieved. To avoid repetition, details are not described herein again.

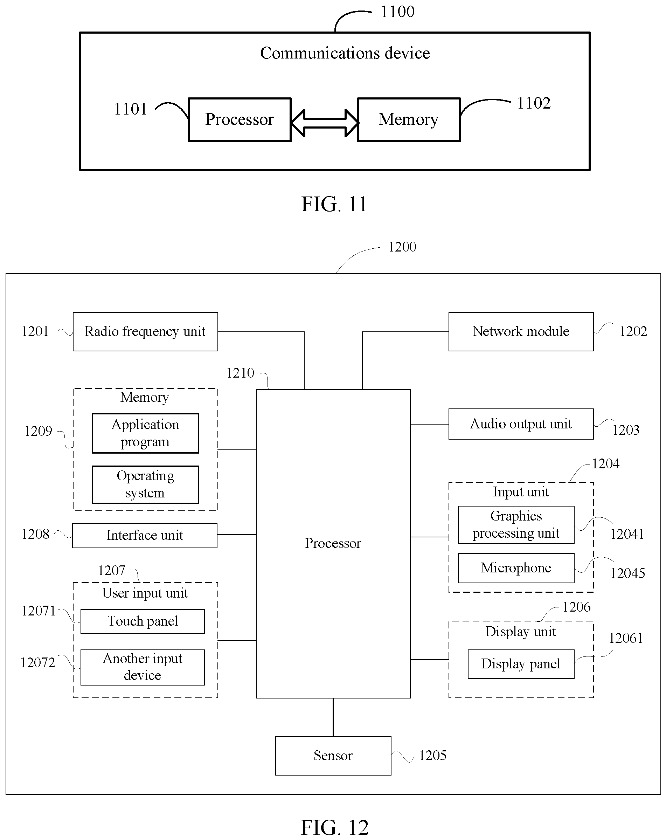

Optionally, as shown in FIG. 11, an embodiment of this application further provides a communications device 1100, including a processor 1101, a memory 1102, and a program or an instruction stored in the memory 1102 and capable of running on the processor 1101. For example, in a case that the communications device 1100 is a terminal, when the program or the instruction is executed by the processor 1101, the processes of the foregoing method embodiments in FIG. 5 are implemented, with the same technical effects achieved. In a case that the communications device 1100 is a network-side device, when the program or the instruction is executed by the processor 1101, the processes of the foregoing method embodiments in FIG. 8 are implemented, with the same technical effects achieved. To avoid repetition, details are not described herein again.

FIG. 12 is a schematic diagram of a hardware structure of a terminal according to an embodiment of this application.

The terminal 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Persons skilled in the art can understand that the terminal 1200 may further include a power supply (such as a battery) that supplies power to each component. The power supply may be logically connected to the processor 1210 by using a power management system, to implement functions such as charging, discharging, and power consumption management by using the power management system. The terminal structure shown in FIG. 12 constitutes no limitation on the terminal, and the terminal may include more or fewer components than those shown in the figure, or combine some components, or have different component arrangements. Details are not described herein.

It should be understood that, in this embodiment of this application, the input unit 1204 may include a graphics processing unit (Graphics Processing Unit, GPU) 12041 and a microphone 12042. The graphics processing unit 12041 processes image data of a static picture or a video obtained by an image capture apparatus (such as a camera) in a video capture mode or an image capture mode. The display unit 1206 may include a display panel 12061. The display panel 12061 may be configured in a form such as a liquid crystal display or an organic light-emitting diode. The user input unit 1207 includes a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a functional button (such as a volume control button or a power on/off button), a trackball, a mouse, and a joystick. Details are not described herein.

In this embodiment of this application, the radio frequency unit 1201 receives downlink data from a network side device and then sends the downlink data to the processor 1210 for processing; and sends uplink data to the network-side device. Usually, the radio frequency unit 1201 includes but is not limited to an antenna, at least one amplifier, a transceiver, a coupler, a low noise amplifier, a duplexer, and the like.

The memory 1209 may be configured to store a software program or an instruction and various data. The memory 1209 may mainly include a program or instruction storage area and a data storage area. The program or instruction storage area may store an operating system, and an application or an instruction required by at least one function (for example, a sound playing function or an image playing function). In addition, the memory 1209 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1210 may include one or more processing units. Optionally, the processor 1210 may integrate an application processor and a modem processor. The application processor mainly processes an operating system, a user interface, an application program, an instruction, and the like. The modem processor mainly processes wireless communication, such as a baseband processor. It can be understood that the modem processor may alternatively be not integrated in the processor 1210.

The radio frequency unit 1201 is configured to:
perform a repetition of target information in a target random access procedure, where the target information includes a physical uplink shared channel PUSCH.

Optionally, the radio frequency unit 1201 is further configured for at lease one of the following:
performing a repetition of a message 3 in a 4-step random access procedure; and
performing a repetition of a PUSCH contained in a message A in a 2-step random access procedure.

Optionally, a quantity of a repetition of the PUSCH satisfies any one of the following:
being configured by system information sent by a network-side device;
being configured by radio resource control RRC information sent by the network-side device;
being agreed by a protocol;
being the same as a quantity of a nominal repetition of a preamble in the target random access procedure;
being the same as a quantity of an actual repetition of the preamble in the target random access procedure; and
being indicated by physical layer signaling.

Optionally, the PUSCH includes at least one of an initially-transmitted PUSCH and a retransmitted PUSCH.

In a case that the quantity of the repetition of the PUSCH is indicated by the physical layer signaling, the quantity of the repetition of the PUSCH satisfies at least one of the following:
that a quantity of a repetition of the initially-transmitted PUSCH is indicated by uplink grant in a random access response RAR or by a physical downlink control channel PDCCH command that triggers the target random access; and
that a quantity of a repetition of the retransmitted PUSCH is indicated by a downlink control information DCI format 1_0 scrambled by a temporary cell radio network temporary identity TC-RNTI.

Optionally, in a case that the quantity of the repetition of the PUSCH is indicated by the physical layer signaling, the quantity of the repetition of the PUSCH satisfies any one of the following:
that the quantity of the repetition of the PUSCH is indicated by a first field newly added in the physical layer signaling; and
that the quantity of the repetition of the PUSCH is indicated by some bit of a second field in the physical layer signaling.

Optionally, the target information further includes a preamble.

Optionally, in a case that the target random access procedure is a 2-step random access procedure, a repetition rule of the target information includes any one of the following:
performing a repetition in combination pairs, where each combination pair includes one preamble and one PUSCH;
a repetition of the preamble being before the repetition of the PUSCH; and
performing a repetition of the preamble and the PUSCH in a crossed manner.

Optionally, a time-frequency resource of a repetition of the target information does not overlap.

Optionally, in a case that time-frequency resources whose present at least two repetitions overlap in a repetition of the target information, the at least two repetitions satisfy any one of the following:
executing a first repetition and abandoning an execution of a second repetition.

The second repetition is another repetition except the first repetition in the at least two repetitions.

Optionally, the first repetition satisfies any one of the following:
that a transmission time configured by the first repetition is before the second repetition;
that a transmission time configured by the first repetition is after the second repetition; and
that the first repetition is determined by the terminal.

Optionally, the repetition of the target information satisfies time-division multiplexing.

Optionally, the repetition of the target information satisfies any one of the following:
in a case that there is an unavailable time-domain resource in a time-domain resource configured by a third repetition, abandoning an execution of the third repetition; and
in a case that there is an unavailable time-domain resource in a time-domain resource configured by a third repetition, postponing an execution of the third repetition, where time-domain resources occupied by the third repetition postponed for execution are all available time-domain resources.

Optionally, the postponing an execution of the third repetition includes any one of the following:
postponing an execution of the third repetition and a fourth repetition; and
executing the third repetition after the fourth repetition.
the fourth repetition includes all repetitions whose time-domain resource is configured after the third repetition.

Optionally, a time-domain resource configured by a repetition of the preamble satisfies any one of the following:
time-domain resources configured by all repetitions are available time-domain resources; and
time-domain resources configured by the first repetition are available time-domain resources.

Optionally, a repetition rule of the PUSCH includes any one of the following:
that different repetitions are in different slots, and each repetition occupies a same initial time-domain resource in the slot;
that all repetitions are continuous in a time-domain resource, and in a case that a first condition is met, a fifth repetition is divided into K sub repetitions;
that all the repetitions are continuous in the time-domain resource, there is a guard period in the time domain resource between two adjacent repetitions, and in a case that the first condition is met, the fifth repetition is divided into the K sub repetitions; and
that all the repetition are continuous in the time-domain resource, there is a guard period in the time-domain resource between the two adjacent repetitions, and in a case that there is an unavailable time-domain resource in a time-domain resource configured by the fifth repetition, an execution of the fifth repetition is abandoned, or the fifth repetition is postponed for execution.

K is an integer greater than 1.

Optionally, the first condition includes any one of the following:
that the time domain resource configured by the fifth repetition crosses a slot boundary; and
that there is an unavailable time-domain resource in the time-domain resource configured by the fifth repetition.

Optionally, a redundant version RV of a repetition of the PUSCH is indicated by at least one of system information, RRC information, and physical layer signaling.

Optionally, a redundant version of a repetition of the PUSCH includes at least one of the following:
a RV sequence 1: {0, 2, 3, 1};
a RV sequence 2: {0, 3, 0, 3};
a RV sequence 3: {0, 0, 0, 0};
a RV sequence 4: {a, c, d, b}; and
a RV sequence 5: {a, d, a, d}.

A includes L zeros, b includes L ones, c includes L twos, d includes L threes, and L is a positive integer.

Optionally, a value of the L is equal to a number obtained after rounding down a first ratio or rounding up the first ratio.

The first ratio is a ratio of a quantity of the repetition of the PUSCH to 4.

Optionally, a beam of a repetition of the PUSCH satisfies any one of the following:
being indicated by at least one of system information, RRC information, and physical layer signaling; and
being the same with a beam of a repetition of a preamble.

Optionally, beams of different repetitions of the PUSCH are the same or different.

It should be noted that the foregoing terminal 1200 in this embodiment is capable of implementing the processes of the method embodiments in FIG. 5 in the embodiments of the present invention, with the same beneficial effects achieved. To avoid repetition, details are not described herein again.

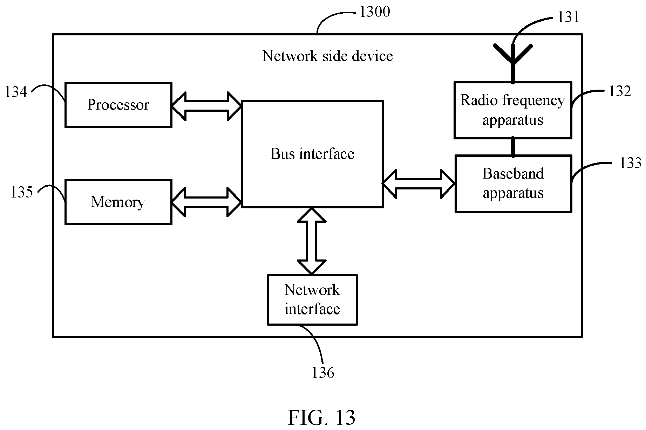

Specifically, an embodiment of this application further provides a network-side device. As shown in FIG. 13, the network device 1300 includes an antenna 131, a radio frequency apparatus 132, and a baseband apparatus 133. The antenna 131 is connected to the radio frequency apparatus 132. In an uplink direction, the radio frequency apparatus 132 receives information by using the antenna 131, and sends the received information to the baseband apparatus 133 for processing. In a downlink direction, the baseband apparatus 133 processes to-be-sent information, and sends the to-be-sent information to the radio frequency apparatus 132. After processing the received information, the radio frequency apparatus 132 sends the information by using the antenna 131.

The frequency band processing apparatus may be located in the baseband apparatus 133. The method performed by the network side device in the foregoing embodiment may be implemented in the baseband apparatus 133. The baseband apparatus 133 includes a processor 134 and a memory 135.

The baseband apparatus 133 may include, for example, at least one baseband board, where a plurality of chips are disposed on the baseband board. As shown in FIG. 13, one chip is, for example, the processor 134, which is connected to the memory 135, so as to invoke a program in the memory 135 to perform operations of the network device shown in the foregoing method embodiment.

The baseband apparatus 133 may further include a network interface 136, configured to exchange information with the radio frequency apparatus 132. For example, the interface is a common public radio interface (common public radio interface, CPRI).

Specifically, the network-side device in this embodiment of this application further includes an instruction or a program stored in the memory 135 and capable of running on the processor 134. The processor 134 invokes the instruction or the program in the memory 135 to perform the processes of the method embodiment in FIG. 8, with the same technical effects achieved. To avoid repetition, details are not described herein again.

An embodiment of the present invention further provides a computer-readable storage medium, where the computer-readable storage medium stores a computer program, and when the computer program is executed by a processor, the processes of the foregoing random access method embodiment may be implemented, with the same technical effects achieved. To avoid repetition, details are not described herein again. The computer-readable storage medium includes a read-only memory (Read-only Memory, ROM), a random access memory (Random Access Memory, RAM), a magnetic disk, or an optical disc.

An embodiment of this application further provides a readable storage medium. The readable storage medium stores a program or an instruction. When the program or the instruction is executed by a processor, the processes in the foregoing embodiments in FIG. 5 or FIG. 8 are implemented, with a same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disc, and an optical disk.

An embodiment of this application further provides a chip. The chip includes a processor and a communications interface, and the communications interface is coupled to the processor. The processor is configured to run a program or an instruction to implement various processes of the foregoing method embodiments in FIG. 5 or FIG. 8, with the same technical effects achieved. To avoid repetition, details are not described herein again.

It should be understood that the chip mentioned in this embodiment of the present application may also be referred to as a system-level chip, a system chip, a system on chip, a system chip on chip, and the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementation manners, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing implementations. The foregoing embodiments are only illustrative rather than restrictive. Inspired by this application, persons of ordinary skill in the art can still derive many variations without departing from the essence of this application and the protection scope of the claims. All these variations shall fall within the protection of this application.

## Claims

1. A random access method, applied to a terminal and comprising:
performing a repetition of target information in a target random access procedure, wherein the target information comprises a physical uplink shared channel PUSCH.

2. The method according to claim 1, wherein the performing a repetition of target information in a target random access procedure comprises at least one of the following:
performing a repetition of a message 3 in a 4-step random access procedure; and
performing a repetition of a PUSCH contained in a message A in a 2-step random access procedure.

3. The method according to claim 1, wherein a quantity of a repetition of the PUSCH satisfies any one of the following:
being configured by system information sent by a network-side device;
being configured by radio resource control RRC information sent by the network-side device;
being agreed by a protocol;
being the same as a quantity of a nominal repetition of a preamble in the target random access procedure;
being the same as a quantity of an actual repetition of the preamble in the target random access procedure; and
being indicated by physical layer signaling.

4. The method according to claim 3, wherein the PUSCH comprises at least one of an initially-transmitted PUSCH and a retransmitted PUSCH; and
in a case that the quantity of the repetition of the PUSCH is indicated by the physical layer signaling, the quantity of the repetition of the PUSCH satisfies at least one of the following:
that a quantity of a repetition of the initially-transmitted PUSCH is indicated by uplink grant in a random access response RAR or by a physical downlink control channel PDCCH command that triggers the target random access; and
that a quantity of a repetition of the retransmitted PUSCH is indicated by a downlink control information DCI format 1_0 scrambled by a temporary cell radio network temporary identity TC-RNTI.

5. The method according to claim 3, wherein in a case that the quantity of the repetition of the PUSCH is indicated by the physical layer signaling, the quantity of the repetition of the PUSCH satisfies any one of the following:
that the quantity of the repetition of the PUSCH is indicated by a first field newly added in the physical layer signaling; and
that the quantity of the repetition of the PUSCH is indicated by some bit of a second field in the physical layer signaling.

6. The method according to claim 1, wherein the target information further comprises a preamble.

7. The method according to claim 6, wherein in a case that the target random access procedure is a 2-step random access procedure, a repetition rule of the target information comprises any one of the following:
performing a repetition in combination pairs, wherein each combination pair comprises one preamble and one PUSCH;
a repetition of the preamble being before the repetition of the PUSCH; and
performing a repetition of the preamble and the PUSCH in a crossed manner.

8. The method according to claim 7, wherein a time-frequency resource of a repetition of the target information does not overlap.

9. The method according to claim 7, wherein in a case that time-frequency resources whose present at least two repetitions overlap in a repetition of the target information, the at least two repetitions satisfy any one of the following:
executing a first repetition and abandoning an execution of a second repetition, wherein
the second repetition is another repetition except the first repetition in the at least two repetitions.

10. The method according to claim 9, wherein the first repetition satisfies any one of the following:
that a transmission time configured by the first repetition is before the second repetition;
that a transmission time configured by the first repetition is after the second repetition; and
that the first repetition is determined by the terminal.

11. The method according to claim 7, wherein the repetition of the target information satisfies time-division multiplexing.

12. The method according to claim 6, wherein a repetition of the target information satisfies any one of the following:
in a case that there is an unavailable time-domain resource in a time-domain resource configured by a third repetition, abandoning an execution of the third repetition; and
in a case that there is an unavailable time-domain resource in a time-domain resource configured by a third repetition, postponing an execution of the third repetition, where time-domain resources occupied by the third repetition postponed for execution are all available time-domain resources.

13. The method according to claim 12, wherein the postponing an execution of the third repetition comprises any one of the following:
postponing an execution of the third repetition and a fourth repetition; and
executing the third repetition after the fourth repetition.
the fourth repetition includes all repetitions whose time-domain resource is configured after the third repetition.

14. The method according to claim 6, wherein a time-domain resource configured by a repetition of the preamble satisfies any one of the following:
time-domain resources configured by all repetitions are available time-domain resources; and
time-domain resources configured by the first repetition are available time-domain resources.

15. The method according to claim 1, wherein a repetition rule of the PUSCH comprises any one of the following:
that different repetitions are in different slots, and each repetition occupies a same initial time-domain resource in the slot;
that all repetitions are continuous in a time-domain resource, and in a case that a first condition is met, a fifth repetition is divided into K sub repetitions;
that all the repetitions are continuous in the time-domain resource, there is a guard period in the time domain resource between two adjacent repetitions, and in a case that the first condition is met, the fifth repetition is divided into the K sub repetitions; and
that all the repetition are continuous in the time-domain resource, there is a guard period in the time-domain resource between the two adjacent repetitions, and in a case that there is an unavailable time-domain resource in a time-domain resource configured by the fifth repetition, an execution of the fifth repetition is abandoned, or the fifth repetition is postponed for execution, wherein
K is an integer greater than 1.

16. The method according to claim 15, wherein the first condition comprises any one of the following:
that the time domain resource configured by the fifth repetition crosses a slot boundary; and
that there is an unavailable time-domain resource in the time-domain resource configured by the fifth repetition.

17. The method according to claim 1, wherein a redundant version RV of a repetition of the PUSCH is indicated by at least one of system information, RRC information, and physical layer signaling.

18. The method according to claim 1, wherein a redundant version of a repetition of the PUSCH comprises at least one of the following:
a RV sequence 1: {0, 2, 3, 1};
a RV sequence 2: {0, 3, 0, 3};
a RV sequence 3: {0, 0, 0, 0};
a RV sequence 4: {a, c, d, b}; and
a RV sequence 5: {a, d, a, d}.
a comprises L zeros, b comprises L ones, c comprises L twos, d comprises L threes, and L is a positive integer.

19. The method according to claim 18, wherein a value of the L is equal to a number obtained after rounding down a first ratio or rounding up the first ratio, wherein
the first ratio is a ratio of a quantity of the repetition of the PUSCH to 4.

20. The method according to claim 1, wherein a beam of a repetition of the PUSCH satisfies any one of the following:
being indicated by at least one of system information, RRC information, and physical layer signaling; and
being the same with a beam of a repetition of a preamble.

21. The method according to claim 1, wherein beams of different repetitions of the PUSCH are the same or different.

22. A configuration method, applied to a network-side device, and comprising:
sending first configuration information, wherein the first configuration information is used to configure a terminal to perform a repetition of target information in a target random access procedure, wherein the target information comprises a physical uplink shared channel PUSCH.

23. The method according to claim 22, wherein the first configuration information is used to configure at least one of the following:
that a terminal performs a repetition of a message 3 in a 4-step random access procedure; and
that the terminal performs a repetition of a PUSCH contained in a message A in a 2-step random access procedure.

24. The method according to claim 22, further comprising:
sending first indication information, wherein the first indication information is used to indicate a quantity of a repetition of the PUSCH; and
the first indication information comprises at least one of the following: system information, RRC information, and physical layer signaling.

25. The method according to claim 24, wherein the PUSCH comprises at least one of an initially-transmitted PUSCH and a retransmitted PUSCH; and
in a case that the quantity of the repetition of the PUSCH is indicated by the physical layer signaling, the quantity of the repetition of the PUSCH satisfies at least one of the following:
that a quantity of a repetition of the initially-transmitted PUSCH is indicated by uplink grant in a random access response RAR or by a physical downlink control channel PDCCH command that triggers the target random access; and
that a quantity of a repetition of the retransmitted PUSCH is indicated by a downlink control information DCI format 1_0 scrambled by a temporary cell radio network temporary identity TC-RNTI.

26. The method according to claim 24, wherein in a case that the quantity of the repetition of the PUSCH is indicated by the physical layer signaling, the quantity of the repetition of the PUSCH satisfies any one of the following:
that the quantity of the repetition of the PUSCH is indicated by a first field newly added in the physical layer signaling; and
that the quantity of the repetition of the PUSCH is indicated by some bit of a second field in the physical layer signaling.

27. The method according to claim 22, wherein the target information further comprises a preamble.

28. The method according to claim 27, wherein in a case that the target random access procedure is a 2-step random access procedure, the method further comprises:
sending second configuration information, wherein the second configuration information is used to configure a repetition rule of the target information, wherein
the repetition rule of the target information satisfies any one of the following:
performing a repetition in combination pairs, wherein each combination pair comprises one preamble and one PUSCH;
a repetition of the preamble being before the repetition of the PUSCH; and
performing a repetition of the preamble and the PUSCH in a crossed manner.

29. The method according to claim 22, further comprising:
sending third configuration information, wherein the third configuration information is used to configure a repetition rule of the PUSCH, wherein
The repetition rule of the PUSCH includes any one of the following:
that different repetitions are in different slots, and each repetition occupies a same initial time-domain resource in the slot;
that all repetitions are continuous in a time-domain resource, and in a case that a first condition is met, a fifth repetition is divided into K sub repetitions;
that all the repetitions are continuous in the time-domain resource, there is a guard period in the time domain resource between two adjacent repetitions, and in a case that the first condition is met, the fifth repetition is divided into the K sub repetitions; and
that all the repetition are continuous in the time-domain resource, there is a guard period in the time-domain resource between the two adjacent repetitions, and in a case that there is an unavailable time-domain resource in a time-domain resource configured by the fifth repetition, an execution of the fifth repetition is abandoned, or the fifth repetition is postponed for execution, wherein
K is an integer greater than 1.

30. The method according to claim 29, wherein the first condition comprises any one of the following:
that the time domain resource configured by the fifth repetition crosses a slot boundary; and
that there is an unavailable time-domain resource in the time-domain resource configured by the fifth repetition.

31. The method according to claim 22, further comprising:
sending second indication information, wherein the second indication information is used to indicate a redundant version of a repetition of the PUSCH; and
the second indication information comprises at least one of the following: system information, RRC information, and physical layer signaling.

32. The method according to claim 31, wherein a redundant version of a repetition of the PUSCH comprises at least one of the following:
a RV sequence 1: {0, 2, 3, 1};
a RV sequence 2: {0, 3, 0, 3};
a RV sequence 3: {0, 0, 0, 0};
a RV sequence 4: {a, c, d, b}; and
a RV sequence 5: {a, d, a, d}.
a comprises L zeros, b comprises L ones, c comprises L twos, and d comprises L threes.

33. The method according to claim 32, wherein a value of the L is equal to a number obtained after rounding down a first ratio or rounding up the first ratio, wherein
the first ratio is a ratio of a quantity of the repetition of the PUSCH to 4.

34. The method according to claim 22, further comprising:
sending third indication information, wherein the third indication information is used to indicate a quantity of a repetition of the PUSCH, wherein
the third indication information comprises at least one of the following: system information, RRC information, and physical layer signaling.

35. The method according to claim 34, wherein beams of different repetitions of the PUSCH are the same or different.

36. A random access apparatus, applied to a terminal and comprising:
a transmission module, configured to perform a repetition of target information in a target random access procedure, wherein the target information comprises a physical uplink shared channel PUSCH.

37. The random access apparatus according to claim 36, wherein the transmission module is specifically configured for at least one of the following:
performing a repetition of a message 3 in a 4-step random access procedure; and
performing a repetition of a PUSCH contained in a message A in a 2-step random access procedure.

38. The random access apparatus according to claim 36, wherein a quantity of a repetition of the PUSCH satisfies any one of the following:
being configured by system information sent by a network-side device;
being configured by radio resource control RRC information sent by the network-side device;
being agreed by a protocol;
being the same as a quantity of a nominal repetition of a preamble in the target random access procedure;
being the same as a quantity of an actual repetition of the preamble in the target random access procedure; and
being indicated by physical layer signaling.

39. The random access apparatus according to claim 38, wherein the PUSCH comprises at least one of an initially-transmitted PUSCH and a retransmitted PUSCH; and
in a case that the quantity of the repetition of the PUSCH is indicated by the physical layer signaling, the quantity of the repetition of the PUSCH satisfies at least one of the following:
that a quantity of a repetition of the initially-transmitted PUSCH is indicated by uplink grant in a random access response RAR or by a physical downlink control channel PDCCH command that triggers the target random access; and
that a quantity of a repetition of the retransmitted PUSCH is indicated by a downlink control information DCI format 1_0 scrambled by a temporary cell radio network temporary identity TC-RNTI.

40. The random access apparatus according to claim 36, wherein the target information further comprises a preamble.

41. The random access apparatus according to claim 40, wherein in a case that the target random access procedure is a 2-step random access procedure, a repetition rule of the target information comprises any one of the following:
performing a repetition in combination pairs, wherein each combination pair comprises one preamble and one PUSCH;
a repetition of the preamble being before the repetition of the PUSCH; and
performing a repetition of the preamble and the PUSCH in a crossed manner.

42. The random access apparatus according to claim 40, wherein a repetition of the target information satisfies any one of the following:
in a case that there is an unavailable time-domain resource in a time-domain resource configured by a third repetition, abandoning an execution of the third repetition; and
in a case that there is an unavailable time-domain resource in a time-domain resource configured by a third repetition, postponing an execution of the third repetition, where time-domain resources occupied by the third repetition postponed for execution are all available time-domain resources.

43. The method according to claim 36, wherein a repetition rule of the PUSCH comprises any one of the following:
that different repetitions are in different slots, and each repetition occupies a same initial time-domain resource in the slot;
that all repetitions are continuous in a time-domain resource, and in a case that a first condition is met, a fifth repetition is divided into K sub repetitions;
that all the repetitions are continuous in the time-domain resource, there is a guard period in the time domain resource between two adjacent repetitions, and in a case that the first condition is met, the fifth repetition is divided into the K sub repetitions; and
that all the repetition are continuous in the time-domain resource, there is a guard period in the time-domain resource between the two adjacent repetitions, and in a case that there is an unavailable time-domain resource in a time-domain resource configured by the fifth repetition, an execution of the fifth repetition is abandoned, or the fifth repetition is postponed for execution, wherein
K is an integer greater than 1.

44. A configuration apparatus, applied to a network-side device, and comprising:
a first sending module, configured to send first configuration information, wherein the first configuration information is used to configure a terminal to perform a repetition of target information in a target random access procedure, wherein the target information comprises a physical uplink shared channel PUSCH.

45. The configuration apparatus according to claim 44, wherein the first configuration information is used to configure at least one of the following:
that a terminal performs a repetition of a message 3 in a 4-step random access procedure; and
that the terminal performs a repetition of a PUSCH contained in a message A in a 2-step random access procedure.

46. The configuration apparatus according to claim 44, wherein the target information further comprises a preamble.

47. The configuration apparatus according to claim 46, wherein in a case that the target random access procedure is a 2-step random access procedure, the configuration apparatus comprises:
a third sending module, configured to send second configuration information, wherein the second configuration information is used to configure a repetition rule of the target information, wherein
the repetition rule of the target information satisfies any one of the following:
performing a repetition in combination pairs, wherein each combination pair comprises one preamble and one PUSCH;
a repetition of the preamble being before the repetition of the PUSCH; and
performing a repetition of the preamble and the PUSCH in a crossed manner.

48. The configuration apparatus according to claim 44, further comprising:
a fourth sending module, configured to send third configuration information, wherein the third configuration information is used to configure a repetition rule of the PUSCH, wherein
the repetition rule of the PUSCH comprises any one of the following:
that different repetitions are in different slots, and each repetition occupies a same initial time-domain resource in the slot;
that all repetitions are continuous in a time-domain resource, and in a case that a first condition is met, a fifth repetition is divided into K sub repetitions;
that all the repetitions are continuous in the time-domain resource, there is a guard period in the time domain resource between two adjacent repetitions, and in a case that the first condition is met, the fifth repetition is divided into the K sub repetitions; and
that all the repetition are continuous in the time-domain resource, there is a guard interval in the time-domain resource between the two adjacent repetitions, and in a case that there is an unavailable time-domain resource in a time-domain resource configured by the fifth repetition, an execution of the fifth repetition is abandoned, or the fifth repetition is postponed for execution, wherein K is an integer greater than 1.

49. A terminal, comprising a processor, a memory, and a program or an instruction stored in the memory and capable of running on the processor, wherein when the program or the instruction is executed by the processor, the steps of the random access method according to any one of claims 1 to 21 are implemented.

50. A network-side device, comprising a processor, a memory, and a program or an instruction stored in the memory and capable of running on the processor, wherein when the program or the instruction is executed by the processor, the steps of the configuration method according to any one of claims 22 to 35 are implemented.

51. A readable storage medium, wherein the readable storage medium stores a program or an instruction, and when the program or the instruction is executed by a processor, the steps of the random access method according to any one of claims 1 to 21 are implemented, or the steps of the configuration method according to any one of claims 22 to 35 are implemented.

52. A chip, wherein the chip comprises a processor and a communications interface, the communications interface is coupled to the processor, and the processor is configured to run a program or an instruction, to implement the steps of the random access method according to any one of claims 1 to 21, or implement the steps of the configuration method according to any one of claims 22 to 35.

53. A terminal, wherein the terminal is configured to implement the steps of the random access method according to any one of claims 1 to 21.

54. A network-side device, wherein the network-side device is configured to implement the steps of the configuration method according to any one of claims 22 to 35.
